# FASCICULE DE BREVET EUROPEEN

(11) **EP 2 849 956 B1**
(45) Date de publication et mention de la délivrance du brevet: **13.07.2016**
(21) Numéro de dépôt: 13723090.0
(22) Date de dépôt: 13.05.2013
(51) Int. Cl.: B60C 11/13, B60C 11/03

(54) **DISPOSITIF ANTI BRUIT AMÉLIORÉ POUR PNEU**
VERBESSERTE GERÄUSCHREDUZIERENDE VORRICHTUNG FÜR EINEN REIFEN
IMPROVED NOISE REDUCING DEVICE FOR A TIRE

(30) Priorité: 18.05.2012 FR 1254554
(43) Date de publication de la demande: 25.03.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MUHLHOFF, Olivier, F-63040 Clermont-Ferrand Cedex 9 (FR); BRUNEAU, François-Xavier, F-63040 Clermont-Ferrand Cedex 9 (FR); BOURGEOIS, Frédéric, F-63040 Clermont-Ferrand Cedex 9 (FR)
(74) Mandataire: Diernaz, Christian
(86) Numéro de dépôt international: PCT/EP2013/059844
(87) Numéro de publication internationale: WO 2013/171172

(56) Documents cités:
- EP-A1- 1 946 943
- FR-A1- 2 961 744
- JP-A- 10 250 317
- JP-A- 60 116 510

## Description

### DOMAINE DE L'INVENTION

La présente invention concerne les bandes de roulement de pneu et plus particulièrement les bandes de roulement comprenant des rainures comportant des dispositifs de fermeture pour réduire le bruit généré par la mise en résonance de l'air dans ces rainures lors du roulage.

### ÉTAT DE LA TECHNIQUE

Il est connu que le passage dans le contact d'un pneu en roulage sur une chaussée génère une circulation d'air dans chaque rainure notamment les rainures d'orientation générale circonférentielle. Avec la chaussée chaque rainure forme un tuyau ayant deux extrémités ouvertes.

L'air dans ce tuyau forme une colonne d'air en vibration dont la fréquence de résonance dépend de la longueur séparant les deux extrémités du tuyau et en conséquence de la longueur de rainure dans le contact avec la chaussée.

Cette résonance de l'air dans les rainures a comme conséquence de générer, dans un véhicule équipé avec ces pneus, un bruit à l'intérieur du véhicule et un bruit à l'extérieur du véhicule. Ces bruits intérieur et extérieur correspondent le plus souvent à une fréquence voisine de ou égale à 1 kHz correspondant à une fréquence particulièrement sensible à l'oreille humaine.

Afin de réduire un tel bruit de résonance, il est connu de disposer, dans chaque rainure d'orientation circonférentielle ou globalement circonférentielle, une pluralité de membranes ou lames flexibles relativement peu épaisses en mélange de caoutchouc, chaque membrane ou lame flexible occupant toute la section de la rainure ou à tout le moins une grande partie de cette section pour former un dispositif de fermeture.

Chaque lame flexible peut s'étendre à partir du fond de la rainure ou être fixée à l'une au moins des parois délimitant ladite rainure. Par relativement peu épaisse, on entend que chaque lame flexible est apte à fléchir pour ouvrir la section de la rainure sous l'effet d'un flux de liquide notamment lors d'un roulage par temps de pluie.

Grâce à ces lames flexibles, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Bien entendu, pour conserver la fonction de drainage de l'eau, en cas de roulage sur chaussée revêtue d'eau, il est nécessaire que cette membrane puisse fléchir d'une façon appropriée sous l'action de la pression de l'eau et ainsi ouvrir la section de la rainure de façon appropriée pour permettre un flux de liquide suffisant.

### Définitions:

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement vers l'extérieur, on entend une direction qui est orientée vers l'extérieur de la cavité interne du pneu.

Plan équatorial : plan perpendiculaire à l'axe de rotation et passant par les points du pneu axialement les plus à l'extérieur, ce plan équatorial divisant virtuellement le pneu en deux moitiés sensiblement égales.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

La surface de roulement d'une bande de roulement correspond à la surface de la bande venant en contact avec un sol lors du roulage d'un pneu pourvu d'une telle bande.

Dans le cas de lames flexibles fixées à l'une des parois délimitant une rainure, comme décrit dans le document de brevet FR2715891, un problème rencontré réside dans le moulage et le démoulage du pneu pourvu desdites lames.

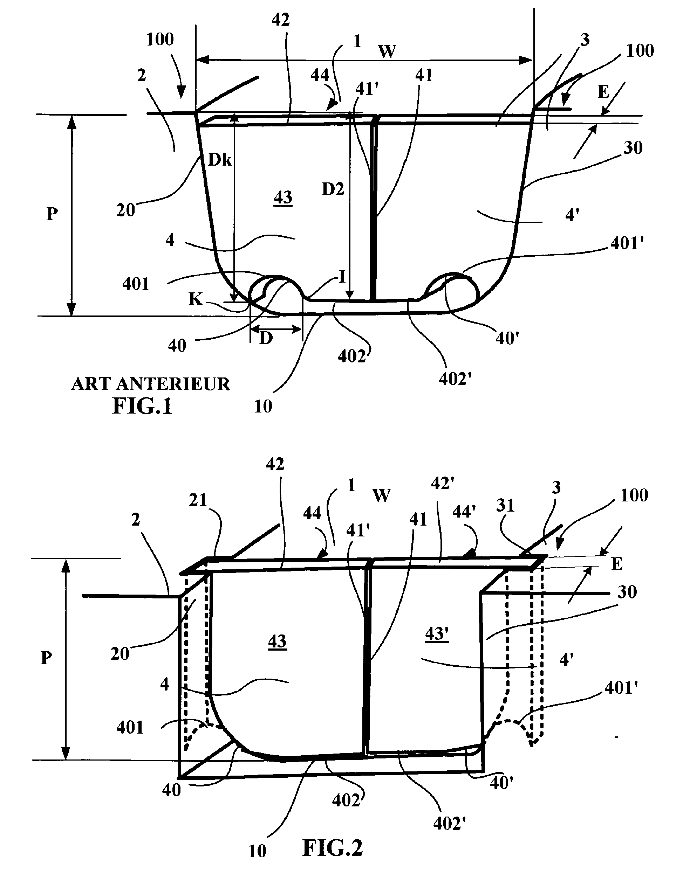

Les déposants de la présente demande ont, dans une demande non publiée à la date de dépôt de la présente demande, décrit un dispositif de fermeture de rainure dont le moulage et le démoulage sont rendus plus aisés comparativement aux dispositifs connus formés de lames solidaires de l'une des parois délimitant une rainure. Selon cet art antérieur et comme on le voit sur la figure 1 jointe à la présente demande, il est proposé une bande de roulement pour pneu, cette bande de roulement ayant une surface de roulement destinée à venir en contact avec une chaussée et comprenant au moins une rainure 1 de largeur W et de profondeur P délimitée par deux parois 20, 30 se faisant face, ces parois étant reliées entre elles par un fond de rainure 10, au moins une rainure comportant une pluralité de dispositifs de fermeture formés par exemple de deux lames flexibles 4, 4' pour fermer cette rainure lors de son passage dans le contact avec une chaussée, chaque lame ayant une épaisseur appropriée pour permettre sa flexion sous l'effet d'une circulation de liquide. Chaque lame flexible est portée par une des parois délimitant la rainure.

Chaque lame d'épaisseur E est limitée par une paroi de fond 40 faisant face au fond de la rainure, une paroi d'extrémité 41 faisant face à l'autre paroi de la rainure et une paroi de contact 42 destinée à venir en contact avec la chaussée et des parois latérales espacées l'une de l'autre d'une distance égale à l'épaisseur E de la lame. La bande de roulement selon cet enseignement est telle que la paroi de fond de la lame comprend une première partie 401 dite partie de raccordement et une seconde partie 402 prolongeant la première partie jusqu'à la partie d'extrémité de la lame, la partie de raccordement se trouvant décalée vers l'extérieur de la bande (c'est-à-dire vers la surface de roulement) par rapport à la seconde partie de la paroi de fond de la lame. De cette façon, on forme une encoche dans la paroi de fond de la lame et cela au voisinage de la paroi à laquelle est rattachée la lame, cette encoche se raccordant à une paroi latérale limitant la rainure. La présence de cette encoche, outre qu'elle facilite le démoulage de la bande, permet d'augmenter la flexibilité de la lame lors du roulage en générant une charnière réduite. Cette augmentation de flexibilité est une fonction combinée de la hauteur de l'encoche et de la largeur de l'encoche. La hauteur de l'encoche est mesurée dans la direction de la profondeur de la rainure. La largeur de l'encoche est mesurée dans la direction de la largeur W de la rainure.

Dans le cadre de cet art antérieur, l'expression "paroi portant la lame" s'interprète comme désignant l'une des parois latérales délimitant la rainure.

Si cet art antérieur permet de réduire les efforts de démoulage, il apparaît que la section de la rainure n'est plus fermée en totalité par ce dispositif de fermeture à cause de la présence d'une encoche sur chaque lame. En conséquence, la performance de réduction du bruit s'en trouve diminuée puisque le tuyau de résonance n'est plus fermé complètement. Le document JP10250317 décrit une bande de roulement selon le préambule de la revendication 1.

### BREF EXPOSÉ DE L'INVENTION

La présente invention est un perfectionnement de ce dernier enseignement et vise à la fois à obtenir un moulage et un démoulage aisé des lames flexibles formant le dispositif de fermeture des rainures et une fermeture la plus complète possible de la section de chaque rainure dans laquelle sont formés lesdits dispositifs.

À cet effet, l'invention a pour objet une bande de roulement pour pneu, cette bande de roulement ayant une surface de roulement destinée à venir en contact avec une chaussée et comprenant au moins une rainure de largeur W et de profondeur P délimitée par deux parois se faisant face, ces parois étant reliées entre elles par un fond de rainure, au moins une rainure comportant une pluralité de dispositifs de fermeture, chaque dispositif de fermeture étant composé d'au moins une lame flexible pour fermer au moins partiellement cette rainure lors de son passage dans le contact avec une chaussée, chaque lame ayant une épaisseur E appropriée pour permettre sa flexion sous l'effet d'une circulation de liquide dans la rainure, cette au moins une lame étant solidaire d'une paroi délimitant la rainure.

Chaque lame d'épaisseur E est limitée par une paroi de fond faisant face au fond de la rainure, une paroi d'extrémité faisant face à l'autre paroi de la rainure et une paroi de contact destinée à venir en contact avec la chaussée et des parois latérales espacées l'une de l'autre d'une distance égale à l'épaisseur E de la lame, la paroi de fond de chaque lame flexible comprenant une encoche située au voisinage de la paroi à laquelle est rattachée la lame respectivement.

Cette bande de roulement est caractérisée en ce que chaque lame est reliée à une des parois délimitant la rainure à l'intérieur d'un logement formé sur la paroi portant ladite lame, chaque logement s'étendant au moins sur toute la hauteur de la lame et ayant une profondeur - mesurée par rapport à la paroi délimitant la rainure - appropriée pour contenir en totalité l'encoche formée sur la paroi de fond de chaque lame du dispositif de fermeture.

Dans le cadre de l'invention, l'expression "paroi portant la lame" doit s'interpréter comme désignant l'une des parois latérales délimitant la rainure à laquelle est reliée la lame flexible du dispositif de fermeture lors du moulage de la bande. Par hauteur d'une lame flexible, il faut entendre la longueur de cette lame mesurée entre le point de la lame le plus proche de la surface de roulement et le point de la lame le plus proche du fond de la rainure.

Le fait que l'encoche soit contenue en totalité à l'intérieur du logement assure une couverture complète de la section de la rainure pour laquelle il est recherché une réduction du bruit de résonance de l'air lors du roulage.

La hauteur de l'encoche est mesurée dans la direction de la profondeur de la rainure. La largeur de l'encoche est mesurée dans la direction de la largeur de la rainure.

La mise en oeuvre de ce dispositif peut intéresser tout type de rainure, que cette rainure soit d'orientation circonférentielle, transversale ou oblique.

Avantageusement, la paroi de fond de chaque lame flexible comprenant une seconde partie dans le prolongement de l'encoche, le profil de cette seconde partie de la paroi de fond de la lame est parallèle au profil du fond de rainure et cette seconde partie est située au plus près dudit fond.

Dans une variante de l'invention le logement de chaque lame flexible est prévu pour s'étendre entre la surface de roulement à l'état initial et le fond de la rainure. Pour une plus grande efficacité, il est judicieux de prolonger chaque lame flexible jusqu'à la surface de roulement à l'état neuf voire même de la prolonger légèrement au-delà.

Avantageusement, le fond de la rainure comprend en outre un logement à l'intérieur duquel la paroi de fond de la lame peut venir s'insérer. Bien entendu, il doit être prévu que chaque lame ne rentre dans ce logement moulé sur le fond de la rainure que sur une très faible hauteur, ceci afin de permettre un dégagement aisé lors d'un roulage sur sol revêtu d'eau pour permettre à l'eau de s'écouler dans la rainure. Sous ces conditions et par le jeu de l'élasticité du matériau caoutchoutique, le retour en position initiale est également possible compte tenu du faible effort de frottement entre la paroi de fond de la lame et le fond de la rainure. Grâce à cette variante, on réalise une fermeture totale de la rainure.

Dans le cas où l'une au moins des parois de la rainure fait un angle différent de zéro degré avec une direction perpendiculaire à la surface de roulement, il est avantageux que chaque logement à l'intérieur duquel est fixée une lame flexible d'un dispositif de fermeture ait une profondeur - mesurée par rapport à la paroi sur laquelle il est formé - qui soit variable dans la direction de la profondeur de la rainure. Il est avantageux que cette profondeur diminue en se rapprochant de la surface de roulement à l'état initial. De cette façon, le fond du logement suit une ligne sensiblement perpendiculaire à la surface de roulement. Ainsi dans le cas d'une rainure délimitée par des parois en contre dépouille (la largeur de la rainure augmente avec la profondeur), la profondeur du logement va en diminuant en allant de la surface de roulement vers le fond de la rainure.

Pour assurer une fermeture encore plus complète de la section de la rainure dans le cas d'un dispositif de fermeture ne comprenant qu'une seule lame pour fermer la section de la rainure, il est judicieux de prévoir également un logement sur la paroi opposée à celle portant la lame flexible afin de venir loger la paroi d'extrémité de ladite lame. On applique ici ce qui a été énoncé lorsqu'un logement est prévu sur le fond de la rainure. De cette façon, la section de la rainure peut être complètement fermée, d'autant que chaque lame flexible s'étend jusqu'à la surface de roulement voire même peut s'étendre légèrement au-delà.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 montre une variante d'un dispositif de l'art antérieur comprenant deux lames flexibles formant un dispositif de fermeture d'une rainure ;
La figure 2 montre une variante selon l'invention d'un dispositif de fermeture similaire de celui montré avec la figure 1 ;
La figure 3 montre une deuxième variante de bande selon l'invention, cette variante étant adaptée au cas d'une rainure dont les parois font un angle sensiblement différent de 90 degrés avec la surface de roulement ;
La figure 4 montre une vue de la surface de roulement correspondant à la variante de la figure 3 ;
La figure 5 montre une troisième variante selon laquelle la paroi d'extrémité et la paroi de fond d'une lame flexible sont logées dans des logements appropriés.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

La figure 1 montre, en coupe, une vue partielle d'une bande de roulement selon l'invention équipant un pneu de dimension **225** / **55 R 17.** On a représenté sur cette figure une rainure 1 limitée par deux éléments de relief 2, 3 de la bande, cette rainure 1 s'étendant sensiblement dans une direction circonférentielle du pneu sur lequel est montée ladite bande. Cette rainure 1, de largeur W - mesurée sur la surface de roulement à l'état neuf, égale à 13 mm et de profondeur P égale à 7.5 mm, est limitée par une première paroi 20 et une seconde paroi 30 se faisant face et un fond de rainure 10 reliant entre elles lesdites deux parois. La bande de roulement comprend une surface de roulement 100 destinée à être en contact avec une chaussée pendant le roulage. Dans ce qui suit, la paroi de fond de la rainure correspond à la partie de la rainure qui est conservée après usure de la bande jusqu'à la limite légale fixée par les règlements nationaux.

Cette rainure 1 comprend un dispositif anti bruit formé par une pluralité de lames flexibles moulées dans ladite rainure et destinés à fermer la section de cette rainure. Chaque dispositif comprend deux lames 4, 4' occupant chacune sensiblement la moitié de la section de la rainure 1, ces lames 4, 4' se trouvant dans le prolongement l'une de l'autre. Chaque lame 4, 4' fait saillie sur une paroi 20, 30 respectivement.

Sur la première paroi 20 est moulée une première lame 4 d'épaisseur faible (c'est-à-dire dans le cas présent d'épaisseur égale à 0.6 mm) afin de pouvoir aisément fléchir autour d'un axe suivant sensiblement la liaison de cette première lame 4 avec la paroi 20 sur laquelle elle est liée dans le but de laisser s'écouler l'eau dans la rainure 1 lors d'un roulage sur chaussée revêtue d'eau et tout en faisant obstacle à la circulation de l'air en roulage sur chaussée sèche.

Cette première lame 4 est limitée par une paroi de fond 40 faisant face au fond 10 de la rainure, une paroi d'extrémité 41 faisant face à la seconde paroi 30 délimitant la rainure 1 et une paroi de contact 42 destinée à venir en contact avec la chaussée et des parois latérales 43, 44 espacées d'une distance égale à l'épaisseur de la lame.

La paroi de fond 40 de la première lame 4 comprend une première partie dite partie de raccordement 401 avec la paroi 20 portant cette lame, cette partie de raccordement 401 ayant un profil en demi-cercle, dont le centre de courbure est localisé du côté du fond 10 de la rainure et dont le diamètre de courbure D est dans le cas présent égal à 2 mm soit 34 % de la largeur W de la rainure.

Par "localisé du côté du fond 10 de la rainure", il faut comprendre que la partie de raccordement 401 forme une sorte d'encoche dans la lame, la concavité de cette encoche étant tournée vers le fond 10 de la rainure 1. Par ailleurs, la partie de raccordement 401 est prolongée par une partie additionnelle 402 substantiellement rectiligne jusqu'à la partie d'extrémité 41 de la lame 4.

La jonction entre la partie de raccordement 401 et la partie additionnelle 402 se fait - sur la vue de la figure 1, en un point d'inflexion I. La partie de raccordement 401 se termine à son autre extrémité sur la paroi latérale 20 en un point K qui est situé à une distance Dk de la surface de roulement à l'état neuf qui est supérieure à l'épaisseur de matière totale pouvant être usée avant de devoir remplacer le pneu sur un véhicule après roulage (dans le cas présent Dk est égale à 7.3 mm).

On constate que majoritairement tous les points de la partie de raccordement 401 formant une encoche - à l'exception notamment du point de liaison K entre cette partie de raccordement 401 et la paroi 20 portant la lame 4 et du point commun I avec la partie additionnelle 402 de la paroi de fond de la lame, sont plus près de la surface de roulement 100 à l'état neuf que les points de la partie additionnelle 402 par rapport à la même surface de roulement.

En combinaison avec cette première lame 4, il est formé une seconde lame 4' de même géométrie, cette seconde lame 4' étant liée à la seconde paroi 30 située en vis-à-vis de la première paroi 4 afin d'obstruer en quasi-totalité la section transversale de la rainure 1. Dans le cas présenté, la première lame 4 et la seconde lame 4' sont formées de manière à avoir leurs parties d'extrémité respectives situées en vis-à-vis l'une de l'autre et en contact l'une contre l'autre après le moulage de la bande.

Grâce à la présence d'une encoche sur chaque lame, il est plus facile de mouler une pluralité de lames formant un dispositif de fermeture pour atténuer le bruit de résonance de l'air dans la rainure.

Par ailleurs et comme la personne du métier est à même de l'imaginer, après une usure suffisante pour atteindre les points de la partie de raccordement situés les plus près de la surface de roulement, les lames se désolidarisent de la bande et libèrent ainsi la totalité de la section restante de la rainure, ce qui est favorable d'un point de vue écoulement de liquide dans la rainure restante.

Dans la variante montrée avec la figure 2, le dispositif anti bruit est, de façon similaire à ce qui a été décrit avec le support de la figure 1, composé d'une pluralité de paires de lames flexibles 4, 4', une première lame 4 étant solidaire d'une paroi 20 délimitant la rainure 1 et une seconde lame 4' étant solidaire de la paroi 30 en vis-à-vis. Les références numériques de cette figure 2 désignent les mêmes parties que sur la figure 1. Les caractéristiques géométriques des lames 4, 4' sont sensiblement identiques à celles des lames de la variante montrée avec la figure 1 à la différence près que chacune de ces lames 4, 4' est liée à une des parois délimitant la rainure 1 dans un logement 21, 31 prévu dans les parois 20 et 30 respectivement.

La profondeur de chaque logement, mesurée sensiblement perpendiculairement à la paroi délimitant la rainure est suffisante pour que chaque encoche 401, 401' soit en totalité située à l'intérieur d'un logement. Donc la profondeur du logement sur la première paroi 20 est au moins égale au diamètre D de l'encoche 401. La largeur de chaque logement est suffisante pour permettre l'ancrage d'une lame d'épaisseur E. De façon avantageuse, la forme de chaque logement peut être appropriée pour permettre une flexion aisée de la lame qui est ancrée dans ledit logement.

En outre, la paroi de fond 40, 40' de chaque lame 4, 4' est prévue pour être au plus près de la paroi de fond 10 de la rainure 1 (dans le cas présent de l'ordre de 0.5 mm) afin que ces lames 4, 4' ferment le plus possible la section de ladite rainure. Dans cette variante, chaque logement s'ouvre sur la surface de roulement 100 et s'étend jusqu'à une profondeur égale à la profondeur P de la rainure 1.

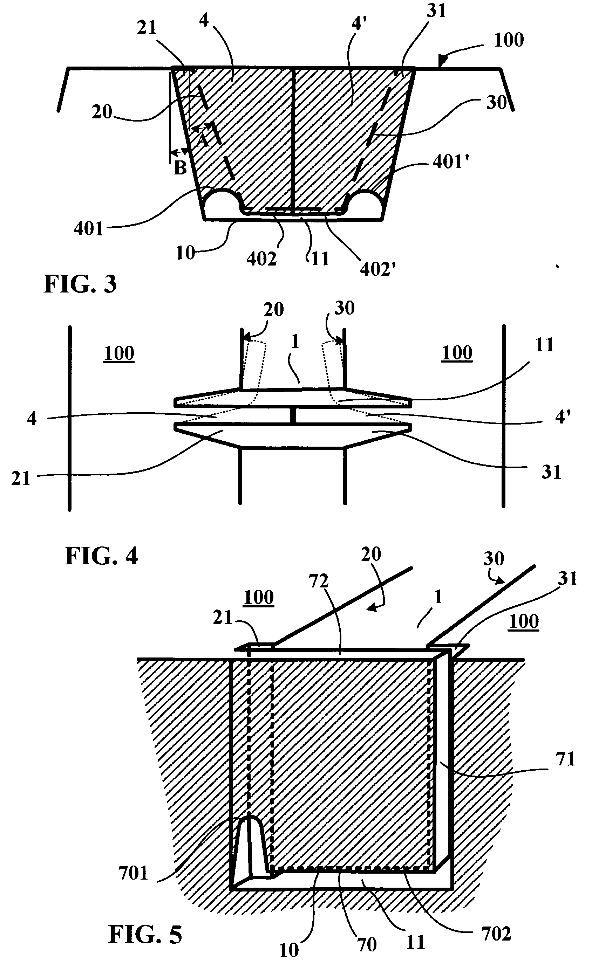

Dans la variante selon l'invention montrée avec la figure 3 montrant une vue en coupe transversale et la figure 4 - cette dernière montrant une vue en surface, on retrouve le dispositif de fermeture de la figure 2 avec deux lames flexibles, ce dispositif comprenant deux aménagements avantageux. En effet, il a été formé dans le fond 10 de la rainure 1 un logement 11 sous la forme d'une rainure de faible profondeur (dans le cas présent au plus égale à 1 mm). Ce logement 11 est prévu pour se trouver dans le prolongement des logements 21 et 31 formés dans les parois latérales 20 et 30 délimitant la rainure 1. Ainsi les lames flexibles 4 et 4' du dispositif de fermeture sont solidaires des parois latérales 20 et 30 à l'intérieur des logements 21 et 31 respectivement et ces mêmes lames flexibles ont leurs parois de fond 40 et 40' qui sont prévues pour rentrer dans le logement 11 formé sur le fond 10 de la rainure.

Dans le cas présenté avec la figure 3, on observe que les parois latérales 20 et 30 délimitant la rainure 1 sont inclinées d'un angle A par rapport à une perpendiculaire à la surface de roulement 100 et que le logement dans lequel est fixée une lame est également incliné d'un angle B inférieur à l'angle A par rapport à une même perpendiculaire. Ainsi la profondeur de chaque logement 21, 31, à l'intérieur duquel est fixée une lame flexible du dispositif de fermeture, va en décroissant en allant du fond 10 de la rainure vers la surface de roulement 100.

En outre, et comme le montre la figure 4 représentant une vue de dessus du dispositif montré avec la figure 3, les parois latérales délimitant les logements 21 et 31 sur les parois latérales délimitant la rainure vont en s'écartant l'une de l'autre pour faciliter l'ouverture des lames flexibles du dispositif de fermeture. En condition de roulage sur chaussée non revêtue d'eau, les lames restent dans la position telle que représentée à la figure 4. Lors d'un roulage sur chaussée recouverte d'eau, le flux de liquide fait sortir les lames du logement 11 formé sur le fond de la rainure et fléchissent selon la géométrie montrée en traits pointillés sur la figure 4.

Dans la variante montrée avec la figure 5, chaque dispositif de fermeture d'une rainure 1 est composé d'une lame flexible 7 unique reliée à la bande de roulement par une de ses parois latérales formée à l'intérieur d'un logement 21 réalisé dans une paroi latérale 20 délimitant la rainure 1, ce logement 21 étant de dimensions appropriées pour que l'encoche 701 formée sur la lame flexible 7 soit entièrement contenue dans ledit logement 21. En outre, l'autre paroi d'extrémité 71 de la lame 7 ainsi que la paroi de fond 70 sont situés à l'intérieur de logements 31 et 11 respectivement afin de réaliser une fermeture complète de la rainure 1 à l'état neuf (cette lame 7 ayant sa paroi de contact 72 qui se trouve au niveau de la surface de roulement 100). L'encoche 701 est prolongée par une partie 702 pour former la paroi de fond de la lame 7.

L'invention ayant été décrite de manière générale et au moyen de quelques variantes, il doit être compris que cette invention n'est pas limitée à ces seules variantes décrites et représentées. Les diverses variantes décrites ici peuvent être combinées entre elles par la personne du métier en fonction de l'objectif poursuivi.

Il est clair que diverses modifications peuvent y être apportées sans sortir du cadre général de la présente invention défini par les revendications ci-jointes. Notamment il est possible de former un dispositif de fermeture comprenant au moins deux lames selon l'invention, ces lames étant décalées l'une par rapport à l'autre dans la direction principale de la rainure dans laquelle ledit dispositif de fermeture est formé (la direction principale de la rainure correspondant à la direction selon laquelle s'écoule un flux de liquide).

## Revendications

1. Bande de roulement pour pneu, cette bande de roulement ayant une surface de roulement (100) destinée à venir en contact avec une chaussée et comprenant au moins une rainure (1) de largeur W et de profondeur P délimitée par deux parois (20, 30) se faisant face, ces parois étant reliées entre elles par un fond de rainure (10), au moins une rainure (1) comportant une pluralité de dispositifs de fermeture, chaque dispositif de fermeture étant composé d'au moins une lame flexible (4, 4') pour fermer au moins partiellement cette rainure (1) lors de son passage dans le contact avec une chaussée, chaque lame flexible (4, 4') ayant une épaisseur E appropriée pour permettre sa flexion sous l'effet d'une circulation de liquide dans la rainure, cette au moins une lame flexible étant solidaire d'une paroi (20, 30) délimitant la rainure (1), chaque lame flexible d'épaisseur E étant limitée par une paroi de fond (40, 40') faisant face au fond de la rainure (10), une paroi d'extrémité (41, 41') faisant face à l'autre paroi de la rainure et une paroi de contact (42, 42') destinée à venir en contact avec la chaussée et des parois latérales (43, 44, 43', 44') espacées l'une de l'autre d'une distance égale à l'épaisseur E de la lame, la paroi de fond (40, 40') de chaque lame flexible comprenant une encoche (401, 401') située au voisinage de la paroi à laquelle est rattachée la lame (4, 4'), respectivement, cette bande de roulement étant **caractérisée en ce que** chaque lame flexible est reliée à une des parois délimitant la rainure à l'intérieur d'un logement (21, 31) formé sur la paroi portant ladite lame, chaque logement (21, 31) s'étendant au moins sur toute la hauteur de la lame et ayant une profondeur - mesurée perpendiculairement à la paroi (20, 30) délimitant la rainure (1) - appropriée pour contenir en totalité l'encoche (401, 401') formée sur la paroi de fond (40, 40') de chaque lame du dispositif de fermeture.

2. Bande de roulement pour pneu selon la revendication 1 **caractérisée en ce que**, la paroi de fond de chaque lame flexible comprenant une seconde partie (401, 401') dans le prolongement de l'encoche (402, 402'), le profil de cette seconde partie est parallèle au fond (10) de la rainure et est située au plus près dudit fond.

3. Bande de roulement pour pneu selon la revendication 1 ou la revendication 2 **caractérisée en ce que** le logement (21, 31) de chaque lame flexible (4, 4') s'étend entre la surface de roulement (100) à l'état initial et le fond (10) de la rainure.

4. Bande de roulement pour pneu selon l'une des revendications 1 à 3 **caractérisée en ce que** le fond (10) de la rainure (1) comprend également un logement (10) à l'intérieur duquel la paroi de fond (40, 40') de chaque lame est insérée sur une faible hauteur.

5. Bande de roulement pour pneu selon la revendication 1 **caractérisée en ce que** le dispositif de fermeture d'une rainure (1) est formé d'une lame flexible unique (7) solidaire d'une paroi (20) délimitant cette rainure (1) et fixée dans un logement (21) prévu dans cette paroi, cette lame flexible unique (7) ayant une paroi d'extrémité (71) prévue pour rentrer dans un logement (31) formé dans l'autre paroi (30) délimitant la même rainure (1) avec la paroi (20).

6. Bande de roulement pour pneu selon l'une des revendications 1 à 5 **caractérisée en ce qu'**au moins une paroi (20, 30) d'une rainure (1) est inclinée selon un angle A différent de zéro degré avec une direction perpendiculaire à la surface de roulement, et **en ce que** la profondeur du logement (21, 31), à l'intérieur duquel est fixée une lame flexible du dispositif de fermeture, est décroissante en allant du fond de la rainure vers la surface de roulement.

## Patentansprüche

1. Reifen-Laufstreifen, wobei dieser Laufstreifen eine Lauffläche (100) hat, die dazu bestimmt ist, mit einer Straße in Kontakt zu kommen, und die mindestens eine Rille (1) einer Breite W und einer Tiefe P enthält, die von zwei einander gegenüberliegenden Wänden (20, 30) begrenzt wird, wobei diese Wände miteinander durch einen Rillengrund (10) verbunden sind, wobei mindestens eine Rille (1) eine Vielzahl von Schließvorrichtungen aufweist, wobei jede Schließvorrichtung aus mindestens einer biegsamen Lamelle (4, 4') besteht, um diese Rille (1) bei ihrem Übergang in den Kontakt mit einer Straße zumindest teilweise zu schließen, wobei jede biegsame Lamelle (4, 4') eine geeignete Dicke E hat, um ihr Biegen unter der Wirkung einer Flüssigkeitsströmung in der Rille zu erlauben, wobei diese mindestens eine biegsame Lamelle fest mit einer die Rille (1) begrenzenden Wand (20, 30) verbunden ist, wobei jede biegsame Lamelle einer Dicke E durch eine Bodenwand (40, 40'), die dem Grund der Rille (10) gegenüberliegt, eine Endwand (41, 41'), die der anderen Wand der Rille gegenüberliegt, und eine Kontaktwand (42, 42'), die dazu bestimmt ist, mit der Straße in Kontakt zu kommen, und Seitenwände (43, 44, 43', 44') begrenzt wird, die zueinander einen Abstand gleich der Dicke E der Lamelle haben, wobei die Bodenwand (40, 40') jeder biegsamen Lamelle eine Kerbe (401, 401') enthält, die sich in der Nähe der Wand befindet, an der die Lamelle (4, 4') befestigt ist, wobei dieser Laufstreifen **dadurch gekennzeichnet ist, dass** jede biegsame Lamelle mit einer der die Rille begrenzenden Wände im Inneren einer Aufnahme (21, 31) verbunden ist, die auf der die Lamelle tragenden Wand ausgebildet ist, wobei jede Aufnahme (21, 31) sich mindestens über die ganze Höhe der Lamelle erstreckt und eine geeignete Tiefe - gemessen lotrecht zur die Rille (1) begrenzenden Wand (20, 30) - hat, um die an der Bodenwand (40, 40') jeder Lamelle der Schließvorrichtung geformte Kerbe (401, 401') vollständig zu enthalten.

2. Reifen-Laufstreifen nach Anspruch 1, **dadurch gekennzeichnet, dass**, da die Bodenwand jeder biegsamen Lamelle einen zweiten Bereich (401, 401') in der Verlängerung der Kerbe (402, 402') enthält, das Profil dieses zweiten Bereichs parallel zum Grund (10) der Rille ist und sich so nahe wie möglich dem Grund befindet.

3. Reifen-Laufstreifen nach Anspruch 1 oder Anspruch 2, **dadurch gekennzeichnet, dass** die Aufnahme (21, 31) jeder biegsamen Lamelle (4, 4') sich zwischen der Lauffläche (100) im Anfangszustand und dem Grund (10) der Rille befindet.

4. Reifen-Laufstreifen nach einem der Ansprüche 1 bis 3, **dadurch gekennzeichnet, dass** der Grund (10) der Rille (1) ebenfalls eine Aufnahme (10) enthält, in deren Inneres die Bodenwand (40, 40') jeder Lamelle über eine geringe Höhe eingefügt ist.

5. Reifen-Laufstreifen nach Anspruch 1, **dadurch gekennzeichnet, dass** die Schließvorrichtung einer Rille (1) von einer einzigen biegsamen Lamelle (7) gebildet wird, die fest mit einer diese Rille (1) begrenzenden Wand (20) verbunden und in einer in dieser Wand vorgesehenen Aufnahme (21) befestigt ist, wobei diese einzige biegsame Lamelle (7) eine Endwand (71) hat, die vorgesehen ist, um in eine Aufnahme (31) einzutreten, die in der anderen Wand (30) gebildet ist, die die gleiche Rille (1) mit der Wand (20) begrenzt.

6. Reifen-Laufstreifen nach einem der Ansprüche 1 bis 5, **dadurch gekennzeichnet, dass** mindestens eine Wand (20, 30) einer Rille (1) gemäß einem Winkel A ungleich null Grad mit einer Richtung lotrecht zur Lauffläche geneigt ist, und dass die Tiefe der Aufnahme (21, 31), in deren Innerem eine biegsame Lamelle der Schließvorrichtung befestigt ist, vom Grund der Rille zur Lauffläche abnimmt.

## Claims

1. Tyre tread, this tread having a tread surface (100) intended to come into contact with a roadway and comprising at least one groove (1) of width W and depth P delimited by two walls (20, 30) facing one another, these walls being joined together by a groove bottom (10), at least one groove (1) comprising a plurality of closure devices, each closure device being made up of at least one flexible blade (4, 4') for at least partially closing this groove (1) as it enters the contact patch in which the tyre is in contact with a roadway, each flexible blade (4, 4') having a thickness E suited to allowing it to flex under the effect of a circulation of liquid in the groove, this at least one flexible blade being secured to a wall (20, 30) delimiting the groove (1), each flexible blade of thickness E being bounded by a bottom wall (40, 40') facing the bottom of the groove (10), an end wall (41, 41') facing the other wall of the groove and a contact wall (42, 42') intended to come into contact with the roadway and lateral walls (43, 44, 43', 44') spaced apart from one another by a distance equal to the thickness E of the blade, the bottom wall (40, 40') of each flexible blade comprising a notch (401, 401') situated in the vicinity of the wall to which the blade (4, 4') is attached respectively, this tread being **characterized in that** each flexible blade is connected to one of the walls delimiting the groove inside a housing (21, 31) formed on the wall bearing the said blade, each housing (21, 31) extending over at least the entire height of the blade and having a depth - measured at right angles to the wall (20, 30) delimiting the groove (1) - suited to containing in its entirety the notch (401, 401') formed on the bottom wall (40, 40') of each blade of the closure device.

2. Tyre tread according to Claim 1, **characterized in that**, with the bottom wall of each flexible blade comprising a second part (401, 401') in the continuation of the notch (402, 402'), the profile of this second part is parallel to the bottom (10) of the groove and situated as close as possible to the said bottom.

3. Tyre tread according to Claim 1 or Claim 2, **characterized in that** the housing (21, 31) of each flexible blade (4, 4') extends between the tread surface (100) in the initial state and the bottom (10) of the groove.

4. Tyre tread according to one of Claims 1 to 3, **characterized in that** the bottom (10) of the groove (1) also comprises a housing (10) into which the bottom wall (40, 40') of each blade is inserted over a small height.

5. Tyre tread according to Claim 1, **characterized in that** the device for closing a groove (1) is formed of a single flexible blade (7) secured to a wall (20) delimiting this groove (1) and fixed in a housing (21) provided in this wall, this single flexible blade (7) having an end wall (71) designed to enter a housing (31) formed in the other wall (30) delimiting the same groove (1) with the wall (20).

6. Tyre tread according to one of Claims 1 to 5, **characterized in that** at least one wall (20, 30) of a groove (1) is inclined at an angle A different from zero degrees with respect to a direction perpendicular to the tread surface, and **in that** the depth of the housing (21, 31), inside which a flexible blade of the closure device is fixed, decreases from the bottom of the groove towards the tread surface.
